# EUROPÄISCHE PATENTSCHRIFT

(11) **EP 1 422 259 B1**
(45) Veröffentlichungstag und Bekanntmachung des Hinweises auf die Patenterteilung: **07.06.2006**
(21) Anmeldenummer: 03025767.9
(22) Anmeldetag: 11.11.2003
(51) Int. Cl.: C08J 3/12

(54) **Verfahren zur Herstellung von thermoplastischen, nicht klebenden Polyurethanen**
Process for production of thermoplasric non-sticky polyurethanes
Procédé de production des polyurethanes thermoplastiques et non collants

(30) Priorität: 22.11.2002 DE 10254600
(43) Veröffentlichungstag der Anmeldung: 26.05.2004
(73) Patentinhaber: Bayer MaterialScience AG, 51368 Leverkusen (DE)
(72) Erfinder: Kaufhold, Wolfgang, Dr., 51061 Köln (DE); Gestermann, Eva, Dr., 51063 Köln (DE); Röhrig, Wolfgang, 51467 Bergisch Gladbach (DE)

(56) Entgegenhaltungen:
- WO-A-99/18148
- DE-A- 2 404 153
- DE-A- 19 858 906
- US-A- 4 289 825

## Beschreibung

Die Erfindung betrifft ein Verfahren zur Herstellung von thermoplastischen Polyurethanen (TPU) mit geringer Neigung zur Oberflächenverklebung der Granulate.

Es ist bekannt, dass die Granulate von aliphatischen TPU auf Basis Isophorondiisocyanat (IPDI) oder auf Basis 4,4'-, 2,4'- und 2,2'- Dicyclohexylmethandiisocyanat und Isomerengemische davon (H₁₂-MDI) zum Oberflächenverkleben neigen (siehe EP-A 1090940), auch wenn diese TPU die bekannten Wachse und/oder Trennmittel enthalten.

Dieses auch bei weichen (Shore A-Härte < 80) TPU auf Basis Hexamethylendiisocyanat (HDI) und Methylendiisocyanat (MDI) auftretende Oberflächenverkleben tritt bei TPU auf Basis H₁₂-MDI und IPDI auch bei den harten Produkten im Bereich einer Shore D-Härte > 40 auf.

Formkörper aus diesen aliphatischen TPU werden überall dort eingesetzt, wo gute Lichtstabilität und hohe Transparenz gefordert werden, wie z.B. flexible Scheiben (z.B. Cabriolet-Rückscheiben), elastische Zwischenschicht bei Sicherheitsverglasung usw.

Weiche thermoplastische Kunststoffe, wie z.B. aliphatische TPU, müssen in Gebinden bei Temperaturen von ca. 10-40°C gelagert und transportiert werden, da nach Lagerung und Transport die Granulate noch rieselfähig sein müssen (keine Agglomeration), um bei der weiteren Verarbeitung gehandhabt werden zu können. Darüber hinaus müssen aliphatische TPU vor der Verarbeitung bei Temperaturen >50°C getrocknet werden, um einen Molekulargewichtsabbau bei der Verarbeitung zu vermeiden, wobei auch nach dem Trocknen eine Agglomeration vermieden werden sollte (Erhalt der Rieselfähigkeit).

Ein einfaches Aufbringen von bekannten Wachsen und/oder Trennmitteln auf die Granulate ist nicht ausreichend, um ein rieselfähiges Granulat zu erhalten, das auch nach einer eventuellen Trocknung noch rieselfähig ist.

Aufgabe war es daher, ein Verfahren zur Verfügung zu stellen, welches ein Verkleben der aliphatischen TPU-Granulate an der Oberfläche verhindert bzw. verringert, so dass ein rieselfähiges Granulat erhalten wird, das zudem unbeschadet getrocknet werden kann. Die Lichtstabilität und die Transparenz der aus diesem TPU hergestellten Formkörper sollte nicht negativ beeinflusst werden.

Diese Aufgabe konnte überraschenderweise durch das erfindungsgemäße Verfahren gelöst werden.

Gegenstand der Erfindung ist ein Verfahren zur Herstellung von Granulaten aus thermoplastischen Polyurethanen (TPU), die erhältlich sind durch Reaktion von
- A): cycloaliphatischen Diisocyanaten mit
- B): mindestens einem Polyol mit einem zahlenmittleren Molekulargewicht zwischen 600 und 8000 g/mol, und
- C): mindestens einem Kettenverlängerer mit einem zahlenmittleren Molekulargewicht zwischen 60 und 500 g/mol
unter Zugabe von
- D): gegebenenfalls Katalysatoren und
- E): gegebenenfalls üblichen Hilfs- und Zusatzstoffen,
welches dadurch gekennzeichnet ist, dass vor und/oder nach der Zerkleinerung der thermoplastischen Polyurethane (TPU) nacheinander a) ein oder mehrere bei mindestens 30°C flüssige Benetzungsmittel, vorzugsweise bei mindestens 20°C flüssige Benetzungsmittel, in einer Konzentration von 0,01 bis 0,5 Gew.-%, bevorzugt 0,03 bis 0,3 Gew.-%, besonders bevorzugt 0,05 bis 0,3 Gew.-%, bezogen auf die Summe von A, B und C auf das TPU aufgebracht werden und danach b) ein oder mehrere feste Puderungsmittel mit einer Schmelztemperatur von ≥ 50°C, vorzugsweise ≥ 60°C, in einer Konzentration von 0,01 bis bis 0,5 Gew.-%, bevorzugt 0,02 bis 0,2 Gew.-%, bezogen auf die Summe von A, B und C auf das TPU aufgebracht werden.

Als cycloaliphatische Diisocyanate (Komponente A) werden vorzugsweise 1,4-Cyclohexandiisocyanat, 1-Methyl-2,4-cyclohexandiisocyanat, 1-Methyl-2,6-cyclohexandiisocyanat und Isomerengemische davon, Isophorondiisocyanat (IPDI), 4,4'-, 2,4'- und 2,2'-Dicyclohexylmethandiisocyanat (H₁₂-MDI) und Isomerengemische davon eingesetzt.

Als Komponente B) werden lineare hydroxylterminierte Polyole mit einem zahlenmittleren Molekulargewicht von 600 bis 8 000 g/Mol, bevorzugt von 700 bis 4 200 g/Mol eingesetzt. Produktionsbedingt enthalten diese oft kleine Mengen an nichtlinearen Verbindungen. Häufig spricht man daher auch von "im wesentlichen linearen Polyolen".

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyesterdiole besitzen mittlere Molekulargewichte von 600 bis 8 000, bevorzugt von 700 bis 4 200 und können einzeln oder in Form von Mischungen untereinander zur Anwendung kommen.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxygruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im wesentlichen linearen Polyetherdiole besitzen Molekulargewichte von 600 bis 8 000, bevorzugt von 700 bis 4 200. Sie können sowohl einzeln als auch in Form von Mischungen untereinander zur Anwendung kommen.

Als Komponente C) werden Diole oder Diamine mit im Mittel 1,8 bis 3,0 zerewitinoff-aktiven Wasserstoffatomen pro Molekül und einem zahlenmittleren Molekulargewicht von 60 bis 500 g/mol eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di(β-hydroxyethyl)-hydrochinon, ethoxylierte Bisphenole, wie z.B. 1,4-Di(β-hydroxyethyl)-bisphenol A. Ebenso geeignet sind auch (cyclo)aliphatische Diamine, wie z.B. Isophorondiamin, Ethylendiamin, 1,2- Propylen-diamin, 1,3-Propylen-diamin, N-Methyl-propylen-1,3-diamin, N,N'-Dimethyl-ethylendiamin und aromatische Diamine, wie z.B. 2,4-Toluylen-diamin und 2,6-Toluylen-diamin, 3,5-Diethyl-2,4-toluylen-diamin und/oder 3,5-Diethyl -2,6-toluylen-diamin und primäre mono-, di-, tri- und/oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen, z.B. als Kettenabbrecher oder Entförmungshilfen, eingesetzt werden. Beispielhaft genannt seien Alkohole wie Oktanol und Stearylalkohol oder Amine wie Butylamin und Stearylamin.

Zur Herstellung der TPUs können die Aufbaukomponenten, gegebenenfalls in Gegenwart von Katalysatoren, Hilfsmitteln und/oder Zusatzstoffen vorzugsweise in solchen Mengen zur Reaktion gebracht werden, dass das Äquivalenzverhältnis von NCO-Gruppen zur Summe der NCO-reaktiven Gruppen, insbesondere der OH-Gruppen der niedermolekularen Kettenverlängerer und Polyole 0,9:1,0 bis 1,1:1,0, vorzugsweise 0,95:1,0 bis 1,10:1,0 beträgt.

Geeignete Katalysatoren (D) sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und/oder Zinnverbindungen.

Neben den TPU-Komponenten und den Katalysatoren können auch Hilfsmittel und/oder Zusatzstoffe (E) bis zu 20 Gew.%, bezogen auf die Gesamtmenge TPU, zugesetzt werden. Sie können in einer der TPU-Komponenten, vorzugsweise in der Komponente B), vorgelöst werden oder auch ggf. nach erfolgter Reaktion in einem nachgeschalteten Mischaggragat, wie z.B. einem Extruder, zudosiert werden.

Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) zu entnehmen.

Die TPU können nach den bekannten Extruder- oder Bandverfahren oder nach dem in der PCT/EP98/07753-Anmeldung beschriebenen Verfahren hergestellt werden.

Als bei Temperaturen von ≤30°C flüssige Benetzungsmittel (Schmelztemperatur T≤ 30°C) können eine oder mehrere der folgenden Verbindungen eingesetzt werden:
a) gesättigte und ungesättigte Carbonsäuren und Polycarbonsäuren, wie z.B. Capronsäure, Ölsäure, Palmitoleinsäure, Linolsäure, Linolensäure und Ricinolsäure,
b) flüssige Alkohole und Polyole, wie z.B. Fettalkohole mit bis zu 12 C-Atomen, z.B. Octanol, Laurylalkohol, Oleylalkohol, Linoleylalkohol, und Polyole, z.B. Ethylenglykol, Propylenglykol, Diethylenglykol, Propandiol, Butandiol, Pentandiol und Glycerin,
c) flüssige Polyglykole (z.B. Polyethylenglykole, Polypropylenglykole) und deren Ester und Ether, wie z.B. Fettsäurepolyglykolester,
d) aliphatische Diamine auf Polyglykolbasis, wie z.B. Jeffamine® (Huntsman)
e) flüssige Ester von gesättigten oder ungesättigten, aliphatischen Carbonsäuren, wie z.B. Laurinsäure, Stearinsäure, Ölsäure, Erucasäure, Palmitinsäure, Citronensäure, 12-Hydroxystearinsäure und Ricinolsäure, oder von Polycarbonsäuren, wie z.B. Bernsteinsäure, Glutarsäure, Adipinsäure, Korksäure, Azelainsäure, Sebacinsäure, Cyclohexandicarbonsäure, mit Monoolen, wie z.B. Fettalkoholen, oder Polyolen, wie z.B. Glykolen (z.B. Ethylen-, Propylenglykol, Diethylenglykol, Triethylenglykol), Polyglykolen, Glycerin oder Pentaerythritalkohol. Die Polyole können ganz oder nur teilweise verestert sein; im letzteren Fall verfügen die Ester noch über freie Hydroxygruppen.
f) flüssige "komplexe Ester": Mischester aus a) aliphatischen, cycloaliphatischen oder aromatischen Dicarbonsäuren, wie z.B. Bernsteinsäure, Glutarsäure, Adipinsäure, Korksäure, Azelainsäure, Sebacinsäure, Cyclohexan-dicarbonsäure, Phthalsäure, Isophthalsäure und Terephthalsäure, b) Polyolen, wie z.B. Glykolen, Glycerin, Pentaerythritalkohol oder Polyglykolen, und c) aliphatischen Monocarbonsäuren, wie z.B. Laurinsäure, Palmitinsäure, Stearinsäure, Ölsäure und Erucasäure. Die Veresterung kann vollständig oder nur partiell sein; im letzteren Fall verfügen die Verbindungen noch über freie Hydroxygruppen.
g) Weichmacher:
   i) aliphatische Dicarbonsäureester, z.B. Adipate, wie beispielsweise Dioctyl- oder Dibutyladipat, oder Sebacate, wie beispielsweise Dioctyl- oder Dibutylsebacat,
   ii) aromatische Dicarbonsäureester, z.B. Phthalate, wie z.B. Dioctylphthalat oder Dibutylphthalat,
   iii) Trimellitate,
   iv) Benzoesäureester, wie z.B. Diethylen- und Dipropylenglykoldibenzoat,
   v) Polyester, beispielsweise auf Basis Adipinsäure und Butandiol,
   vi) Phosphorsäureester, wie z.B. Trikresylphosphat,
   vii) Fettsäureester, wie Butyloleat und Butylstearat,
   viii) Hydroxycarbonsäureester, z.B. Ester von Citronensäure, Weinsäure, Milchsäure und Ricinolsäure,
   ix) Epoxidweichmacher, wie epoxidiertes Soja- oder Leinöl und deren Derivate,
h) Polyolefin-Kohlenwasserstoffe, natürliche und synthetische Polyolefine,
i) oxidierte Polyolefine und deren Derivate, wie z.B. Säuren oder Ester,
j) Siliconöle,
k) fluorierte Verbindungen, wie z.B. Perfluorlaurinsäure,
l) flüssige Paraffine, z.B. Weissöl.

Besonders bevorzugt werden als flüssige Benetzungsmittel eine oder mehrere Verbindungen aus den vorgenannten Gruppen b), c), e), f) und g), ganz besonders bevorzugt aus Gruppe e).

Als feste Puderungsmittel mit einer Schmelztemperatur von ≥ 50°C können eine oder mehrere der folgenden Verbindungen eingesetzt werden:
a) gesättigte und ungesättigte Carbonsäuren und Polycarbonsäuren, wie z.B. Myristinsäure, Palmitinsäure, Stearinsäure, Behensäure, Cerotinsäure, Montansäuren und Camaubawachssäuren,
b) niedermolekulare, oligomere oder polymere Monoole bzw. Polyole, die über mindestens 12 C-Atome verfügen, wie z.B. höhere Fettalkohole und Wachsalkohole,
c) Polyglykole (Polyethylenglykole, Polypropylenglykole) und deren Ester und Ether,
d) Amide, die aus aliphatischen Carbonsäuren bzw. Polycarbonsäuren abgeleitet werden können, wie z.B. Ölsäureamid, Stearylamid, Erucylamid, Palmitinamid, Behensäureamid, Laurylamid, Oleylpalmitamid, Ethylenbisstearylamid, Ethylenbisoleamid und Erucylstearamid,
e) Ester, die aus Monocarbonsäuren oder Polycarbonsäuren, wie z.B. Laurinsäure, Stearinsäure, Ölsäure, Erucasäure, Palmitinsäure, Citronensäure, 12-Hydroxystearinsäure, Ricinolsäure, Benzoesäure, Phthalsäuren, Bernsteinsäure, Glutarsäure, Adipinsäure, Korksäure, Azelainsäure, Sebacinsäure, Cyclohexandicarbonsäure, mit Monoolen, wie z.B. Fett- und Wachsalkoholen, oder mit Polyolen, wie z.B. Glykolen, Glycerin, Pentaerythritalkohol oder Polyglykolen, hergestellt werden können. Die Veresterung kann vollständig oder nur partiell sein; im letzteren Fall verfügen die Verbindungen noch über freie Hydroxygruppen. Beispiele sind Stearylsäureester wie Pentaerythritstearat, Glycerinmono-, -bis- und -tristearat, Dicarbonsäureester von Fettalkoholen, gehärtetes Ricinusöl, Montansäureester sowie Fettalkohol-Fettsäureester.
f) Fettsäureesteramide, wie z.B. Ethylen-stearylamid-stearylsäureester,
g) "komplexe Ester": Mischester aus a) aliphatischen, cycloaliphatischen oder aromatischen Dicarbonsäuren, wie z.B. Bernsteinsäure, Glutarsäure, Adipinsäure, Korksäure, Azelainsäure, Sebacinsäure, Cyclohexan-dicarbonsäure, Phthalsäure, Isophthalsäure und Terephthalsäure, mit b) Polyolen, wie z.B. Glykolen, Glycerin, Pentaerythritalkohol und Polyglykolen, und c) aliphatischen Monocarbonsäuren, wie z.B. Laurinsäure, Palmitinsäure, Stearinsäure, Erucasäure und Montansäuren. Die Veresterung kann vollständig oder nur partiell sein, im letzteren Fall verfügen die Verbindungen noch über freie Hydroxygruppen. Eine teilweise Metallverseifung der Estergruppen ist ebenfalls möglich.
h) Metallseifen, wie z.B. die Alkali- und Erdalkalisalze der Ölsäure, Palmitinsäure, Stearylsäure, Montansäure, Erucasäure oder Cerotinsäure,
i) Mischungen aus Estern und Carboxylaten einer Carbonsäure, wie z.B. aus Calcium-Montanat und Montansäureester,
j) Polyolefin-Wachse,
k) polare Polyolefin-Wachse und ihre Derivate,
l) Paraffine.

Besonders bevorzugt werden als feste Puderungsmittel eine oder mehrere Verbindungen aus den vorgenannten Gruppen d), e), f), g) und i), ganz besonders bevorzugt aus Gruppe g) und i).

Die Behandlung mit den Benetzungs- und Puderungsmitteln kann prinzipiell vor und/oder nach dem Zerkleinern erfolgen. Besonders bei der TPU-Herstellung nach dem Extruderverfahren kann die Behandlung an verschiedenen Stellen erfolgen.

Es ist prinzipiell möglich, dass beide Mittel (Benetzungs- und Puderungsmittel) vor dem Zerkleinern zugegeben werden. Vor dem Zerkleinern bedeutet dabei vorzugsweise, dass nach dem Schmelzeaustritt aus dem Extruder, im Falle der Stranggranulierung während der Abkühlung auf dem Band bzw. kurz vor dem Granulieren beide Mittel nacheinander aufgebracht werden können. Nach dem Zerkleinern bedeutet im Falle der Stranggranulierung vorzugsweise, dass nach der Abkühlung auf dem Band und kurz nach dem Granulieren beide Mittel nacheinander aufgebracht werden. Im Falle der Unterwassergranulierung werden die Mittel nach der Wasserabtrennung (das flüssige Benetzungsmittel kann auch dem Wasser zugegeben werden) auf die Granulate aufgebracht.

Bevorzugt kann auch vor dem Zerkleinern zuerst das flüssige Benetzungsmittel aufgebracht werden und nach dem Zerkleinern das feste Puderungsmittel.

Bei Granulaten mit besonders ausgeprägter Oberflächenklebrigkeit können beide Mittel vor und nach dem Zerkleinern aufgebracht werden.

Das oder die bei ≤ 30°C flüssigen Benetzungsmittel sollen dabei bevorzugt in einer Konzentration von 0,01 bis 0,5 Gew.-%, bezogen auf die Summe von A, B und C, auf das TPU aufgebracht werden. Hierbei sind Mengen von < 0,01 Gew.-% nicht ausreichend und Mengen von > 0,5 % aus wirtschaftlicher Sicht nicht notwendig.

Das oder die festen Puderungsmittel mit einer Schmelztemperatur ≥ 50°C sollen dabei bevorzugt in einer Konzentration von 0,01 bis 0,5 Gew.-%, bezogen auf die Summe von A, B und C, auf das TPU aufgebracht werden. Hierbei sind Mengen von < 0,01 Gew.-% nicht ausreichend und Mengen von > 0,5 Gew.-% aus wirtschaftlicher Sicht nicht notwendig.

Die Erfindung soll anhand der nachfolgenden Beispiele näher erläutert werden.

### Beispiele

### Herstellung des TPU

Die TPU wurden folgendermaßen im Prepolymerverfahren kontinuierlich hergestellt:

Ein Gemisch aus Terathane® 1000, Antioxidationsmittel, Tinuvin® 328 und Dibutylzinndilaurat wurde in einem Kessel unter Rühren auf ca. 90°C erwärmt und anschließend in einem Wärmetauscher kontinuierlich auf ca. 180°C erhitzt. Nach dem Wärmetauscher wurde diese Mischung dann mit H₁₂-MDI (Raumtemperatur) zusammengeführt und nach ca. 30 sec Verweilzeit in das zweite Gehäuse einer Schnecke (ZSK 83) geführt. Das Butandiol (ca. 60°C) wurde ebenfalls in das zweite Gehäuse der ZSK 83 dosiert. Wachs OP wurde in den Einzug dieser ZSK 83 dosiert.

Das gesamte Gemisch reagierte in dem Extruder bis zur vollständigen Umsetzung aus und wurde anschließend granuliert.

### Zusammensetzung des TPU:

a) 1,0 mol Terathane® 1000
b) 3,57 mol 1,4 BDO
c) 4,57 mol H₁₂-MDI
400 ppm DBTL (bezogen auf Terathane® 1000)
1,0 Gew.-% Tinuvin® 328 (bezogen auf a) + b) + c))
0,8 Gew.-% Irganox® 1010 (bezogen auf a) + b) + c))
0,7 Gew.-% Wachs OP (bezogen auf a) + b) + c))

Nach der Granulierung wurde das Granulat direkt nach dem Granulator entnommen und wie im folgenden beschrieben behandelt.

### Vergleichsbeispiel A: unbehandeltes TPU

Vergleichsbeispiel B: 0,2 Gew.-% Wachs OP (bezogen auf a)+b)+c) wurden auf das TPU gepudert und in einem Mischer ca. 2 Stunden bei Raumtemperatur (RT) gemischt.

Erfindungsgemäßes Beispiel C: In einem ersten Schritt wurden 0,1 Gew.-% (bezogen auf a)+b)+c) Loxiol® G40 auf das TPU gegeben und ca. 2 Stunden bei RT in einem Mischer gemischt. Danach wurden 0,1 Gew.-% (bezogen auf a)+b)+c) Wachs OP auf das TPU gepudert und in einem Mischer ca. 2 Stunden bei RT gemischt.

Vergleichsbeispiel D: In einem weiteren Versuch wurde das Granulat nach dem Granulieren in einem Förderrohr zur Abpackung geblasen. Hierbei wurde nach dem Granulator ca. 0,1 Gew.-% (bezogen auf a)+b)+c) des festen Wachses OP in den Granulator/Luftstrom eindosiert.

Erfindungsgemäßes Beispiel E: In einem weiteren Versuch wurde das Granulat nach dem Granulieren in einem Förderrohr zur Abpackung geblasen. Hierbei wurde nach dem Granulator ca. 0,1 Gew.-% des flüssigen Loxiol® G40 (bezogen auf a)+b)+c) in den Granulator/Luftstrom eingesprüht. Ca. 1 m danach wurden ca. 0,1 Gew.-% des festen Wachses OP (bezogen auf a)+b)+c) in den Granulator/Luftstrom eindosiert.

Mit den Granulaten aus Beispiel A bis E wurde der im folgenden beschriebene Granulatklebrigkeitstest durchgeführt.

### Klebrigkeitstest an Granulaten aus Beispiel A bis E

Um die Klebrigkeit von Granulaten zu testen wurde der dafür vorgesehene Zylinder (Innendurchmesser=44mm; Höhe=58mm) in ein Aluminium-Schälchen gestellt und 20g des zu testenden Granulates in den Zylinder eingefüllt.

Dieses Granulat wurde mit einem 500 g schweren Gewicht belastet (Stempel: Innendurchmesser=41mm) und für ca. 15 Std. bei 70°C in einem Umlufttrockenschrank gelagert.

Die Klebrigkeit des Granulates wurde am noch heißen Granulat getestet. Dazu wurde der Zylinder angehoben und das Granulat qualitativ nach folgenden Kriterien beurteilt:
1. Granulat klebt (stark klebend bzw. total verklumpt)
2. Granulat rieselt gut

### Ergebnisse:

| | Granulatklebrigkeit | Bemerkung |
|---|---|---|
| Vergleichsbeispiel A | total verklumpt (auch nach Abkühlen) | |
| Vergleichsbeispiel B | stark klebend | viel Wachs OP an Behälterwand |
| Erfindungsgemäßes Beispiel C | rieselt gut | wenig Wachs OP an Behälterwand |
| Vergleichsbeispiel D | stark klebend | viel Wachs OP an Behälterwand und an Transportrohren |
| Erfindungsgemäßes Beispiel E | rieselt gut | wenig Wachs OP an Behälterwand und an Transportrohren |

- DBTL:: Dibutylzinndilaurat
- Terathane® 1000:: Polytetrahydrofurandiol mit einem mittleren Molekulargewicht M̅ₙ von ca. 1000 g/mol (Fa. DuPont)
- 1,4BDO:: 1,4-Butandiol
- H₁₂-MDI:: Isomerengemisch von Dicyclohexylmethandiisocyanat
- Irganox® 1010:: Tetrakis[methylen-(3,5-di-tert-butyl-4-hydroxyhydrocinnamate)]methan (Fa. Ciba Geigy)
- Tinuvin® 328:: 2-(2'-Hydroxy-3'-5'-di-tert-amylphenyl)benzotriazol (Fa. Ciba Spezialitätenchemie)
- Loxiol® G40:: neutrales, flüssiges Esterwachs der Fa. Cognis
- Wachs OP:: Gemisch aus Montansäureester und Calciummontanat der Fa. Clariant

## Patentansprüche

1. Verfahren zur Herstellung von Granulaten aus thermoplastischen Polyurethanen erhältlich durch Reaktion von
A) cycloaliphatischen Diisocyanaten mit
B) mindestens einem Polyol mit einem zahlenmittleren Molekulargewicht zwischen 600 und 8000 g/mol,
C) mindestens einem Kettenverlängerer mit einem zahlenmittleren Molekulargewicht zwischen 60 und 500 g/mol
unter Zugabe von
D) gegebenenfalls Katalysatoren und
E) gegebenenfalls üblichen Hilfs- und Zusatzstoffen,
**dadurch gekennzeichnet, dass** vor und/oder nach der Zerkleinerung der thermoplastischen Polyurethane (TPU) nacheinander a) ein oder mehrere bei ≤ 30°C flüssige Benetzungsmittel in einer Konzentration von 0,01 bis 0,5 Gew.-%, bezogen auf die Summe von A, B und C auf das TPU aufgebracht werden und danach b) ein oder mehrere feste Puderungsmittel mit einer Schmelztemperatur von ≥ 70°C in einer Konzentration von 0,01 bis 0,5 Gew.-%, bezogen auf die Summe von A, B und C auf das TPU aufgebracht werden.

## Claims

1. Process for the preparation of granules from thermoplastic polyurethanes, which are obtainable by reaction of
A) cycloaliphatic diisocyanates with
B) at least one polyol having a number-average molecular weight of between 600 and 8,000 g/mol and
C) at least one chain-lengthening agent having a number-average molecular weight of between 60 and 500 g/mol
with the addition of
D) optionally catalysts and
E) optionally conventional auxiliary substances and additives,
**characterized in that** before and/or after the comminution of the thermoplastic polyurethanes (TPU), in succession a) one or more wetting agents which are liquid at ≤ 30°C in a concentration of 0.01 to 0.5 wt.%, based on the sum of A, B and C, are applied to the TPU and thereafter b) one or more solid powdering agents with a melting temperature of ≥ 70°C in a concentration of 0.01 to 0.5 wt.%, based on the sum of A, B and C, are applied to the TPU.

## Revendications

1. Procédé pour la préparation de granulés de polyuréthanes thermoplastiques obtenus par réaction de
A) des diisocyanates cycloaliphatiques avec
B) au moins un polyol ayant un poids moléculaire moyen, moyenne en nombre, de 600 à 8000 g/mol,
C) au moins un agent d'allongement des chaînes ayant un poids moléculaire moyen, moyenne en nombre, de 60 à 500 g/mol
avec adjonction de
D) le cas échéant des catalyseurs et
E) le cas échéant des produits auxiliaires et additifs usuels,
**caractérisé en ce que**, avant et/ou après broyage des polyuréthanes thermoplastiques, on applique successivement sur ceux-ci a) un ou plusieurs agents de mouillage liquides à ≤ 30°C à une concentration de 0,01 à 0,5 % du poids total de A), B) et C) puis b) un ou plusieurs agents de poudrage solides ayant une température de fusion ≥ 70°C à une concentration de 0,01 à 0,5 % du poids total de A), B) et C).
